Europäisches Patentamt

European Patent Office

Office européen des brevets

(11) Veröffentlichungsnummer: **0 188 687**
**B1**

# (12) EUROPÄISCHE PATENTSCHRIFT

(45) Veröffentlichungstag der Patentschrift:
14.12.88

(51) Int. Cl.⁴: **B 60 B 17/00,** B 60 B 37/08

(21) Anmeldenummer: 85114460.0

(22) Anmeldetag: 14.11.85

(54) **Radsatz für Schienenfahrzeuge.**

(30) Priorität: 18.01.85 DE 3501488

(43) Veröffentlichungstag der Anmeldung:
30.07.86 Patentblatt 86/31

(45) Bekanntmachung des Hinweises auf die Patenterteilung:
14.12.88 Patentblatt 88/50

(84) Benannte Vertragsstaaten:
AT BE CH FR GB IT LI SE

(56) Entgegenhaltungen:
DE-C-3 019 573
US-A-1 206 583

(73) Patentinhaber: **Messerschmitt- Bölkow- Blohm
Gesellschaft mit beschränkter Haftung, Robert-
Koch- Strasse, D-8012 Ottobrunn (DE)**

(72) Erfinder: **Leo, Rolf, Altdorferstrasse 8, D-8857
Wertingen (DE)**
Erfinder: **Meusel, Karl- Heinz, Hans- Denk- Strasse
26, D-8850 Donauwörth (DE)**
Erfinder: **Uttner, Alfred, Andreas- Mayr Strasse 1,
D-8850 Donauwörth (DE)**

EP 0 188 687 B1

## Beschreibung

Die Erfindung betrifft einen Radsatz für Schienenfahrzeuge gemäß dem Oberbegriff des Patentanspruchs 1.

Bei einem derartigen Radsatz beispielsweise gemäß der DE-C-3 019 573 & EP-A-0 040 680 hat bekanntlich die - durch Verändern der auf das Pulver ausgeübten Magnetisierungswirkung im übertragbaren Moment (Schlupfmoment) einstellbare - Kupplung die Funktion, beim Lauf längs eines Gleises im Falle eines Rollradienunterschiedes der Räder deren partielle Entkopplung, d.h. eine Differenzdrehzahl der Räder zuzulassen und damit den Längsschlupf der Räder gegenüber dem Gleis zu vermindern im Sinne einer Stabilisierung des Radsatzes. Zugleich hat aufgrund der Kupplung der Radsatz für den Lauf durch (enge) Gleisbögen den Vorteil, daß zur Nutzung der dann geforderten (dem Festradsatz eigenen) guten Führungseigenschaften ein eingestellter Schlupf in der Kupplung bloß zu beseitigen ist. Der bekannte Radsatz bevorzugt dabei die Bauform eines Losradsatzes, d.h. die Räder sind auf der (im zugehörigen Gestell feststehenden) Achswelle drehbar angeordnet. Das macht jedoch zwischen den Kupplungsteilen und der Achswelle Stützlager erforderlich, welche zwangsläufig mit denselben hohen Drehzahlen wie die Radlager laufen bzw. hoher Beanspruchung unterliegen und damit aufwendige Sonderlager sein müssen. Das Ausmaß des Lagerungsaufwandes zeigt beispielsweise eine durch die DE-A-3117 126 bekannte Kupplung. Zudem sind bei solchen Bauformen von den Kupplungsteilen weit auskragende, rohrförmige Halbachsen erforderlich, welche über die durchgehende Achswelle geschoben und somit dieser gegenüber einen wesentlich größeren Durchmesser haben müssen, wodurch die für den realen Bahnbetrieb von Hochgeschwindigkeitszügen am Radsatz erforderlichen Scheibenbremsen entsprechender Leistungsfähigkeit nicht ohne Schwierigkeiten unterzubringen sind.

Der Erfindung liegt die Aufgabe zugrunde, bei einem Radsatz der eingangs genannten Art ohne hochbeanspruchte Sonderlager zwischen den Kupplungsteilen und der Achswelle auszukommen in einer für den Bremseinbau vorteilhaften Bauform.

Diese Aufgabe ist gemäß dem Kennzeichen des Patentanspruchs 1 gelöst durch einen Rückgriff auf die klassische Bauform des Radsatzes mit Festrädern auf einer Achswelle unter Teilung der Achswelle in zwei Halbachsen, so daß diese die Funktion von Verbindungselementen zwischen dem zugehörigen Rad und je einem Kupplungsteil zu erfüllen vermögen, wobei die Anordnung beider Kupplungsteile auf dem hohlzylindrischen Halbachsenende sicherstellt, daß die Kupplungslagerung nur noch die Drehzahldifferenz zwischen beiden Halbachsen aufzunehmen braucht und somit quasistatisch betrieben wird.

Das Prinzip eines Festradsatzes mit geteilter Achswelle ist zwar durch die US-A-1 206 583 aus dem Jahre 1916 in Form eines sog. Differential-Radsatzes bekannt. Dieser sollte jedoch lediglich in Anpassung an die Verhältnisse beim straßengängigen Kraftfahrzeug die im Zusammenhang mit den seinerzeit engen Gleisbögen auftretenden Bewegungs- und Verschleißprobleme lösen.

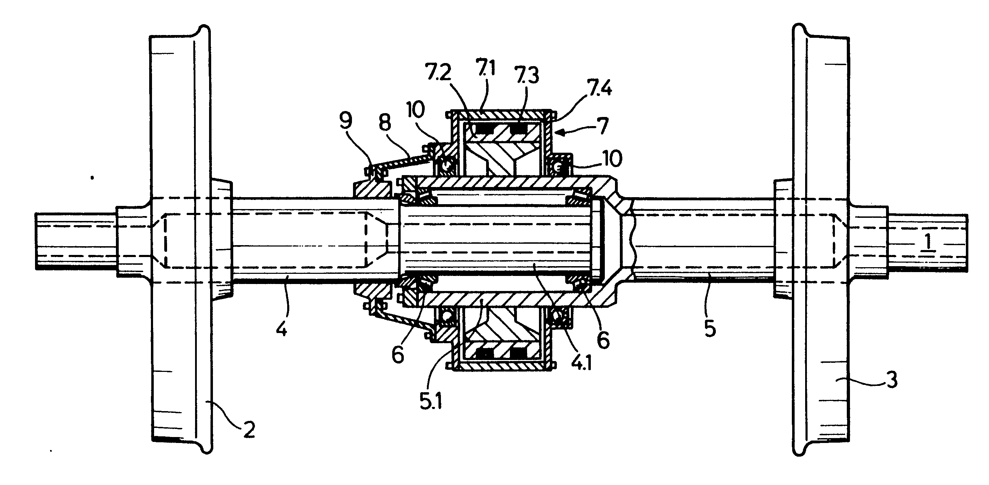

Die Erfindung und die in den Unteransprüchen gekennzeichneten Ausgestaltungen werden im nachfolgenden Ausführungsbeispiel näher erläutert. Hierzu zeigt die Zeichnung einen teilweise längsgeschnittenen Radsatz mit zwei auf einer Achswelle 1 festsitzenden Spurkranz-Rädern 2, 3. Um diese Räder 2, 3 beim Lauf des Radsatzes längs eines Gleises voneinander partiell entkoppeln zu können, ist zum einen die Achswelle 1 in zwei Halbachsen 4, 5 geteilt, von denen die eine Halbachse 4 über einen Endschaft 4.1 in die andere zumindest zur Radsatzmitte hin hohlzylindrische Halbachse 5 eingesteckt ist unter Zwischenfügung einer Radiallagerung aus einem Paar Rollenlager 6. Die Rollenlager 6 sind je einem Ende des Endschaftes 4.1 zugeordnet und gegeneinander angestellt, so daß sie Axialkräfte der beiden Räder 2, 3 aufzunehmen vermögen, daß also die für sich drehbaren Halbachsen 4, 5 gegeneinander axial unverschiebbar sind. Zum anderen sind die beiden Halbachsen 4, 5 über eine Magnetpulver-Kupplung 7 verbunden, beispielsweise der in der DE-B-1 035 419 beschriebenen Art, aus einem zur Achswelle 1 konzentrischen Außenteil 7.1 und Innenteil 7.2 mit einer Erregerspule 7.3 zur Magnetisierung von nicht dargestelltem Magnetpulver im Arbeitsspalt 7.4 zwischen dem Außen- und Innenteil zu deren Reibschlußverbindung mit der Folge einer Drehmomentübertragung je nach Magnetisierungswirkung, d.h. je nach Steuerung des Erregerstromes der Erregerspule 7.3. Dabei ist die eine Halbachse 4 ein Verbindungselement zwischen dem zugeordneten Rad 2 und dem Außenteil 7.1 der Kupplung 7, während deren Innenteil 7.2 über die zweite Halbachse 5 mit dem anderen Rad 3 verbunden ist. Das Innenteil 7.2 der Kupplung 7 ist unmittelbar auf dem hohlzylindrischen Ende 5.1 der zugeordneten Halbachse 5 festsitzend angeordnet, wobei ein Kraftschluß beispielsweise durch eine Preßpaß-(sog. Schrumpf-)Verbindung sichergestellt sein kann. Dagegen ist das Außenteil 7.1 der Kupplung mit der zugeordneten Halbachse 4 über ein das hohlzylindrische Halbachsenende 5.1 überkragendes Verbindungselement 8 gekuppelt, welches mittels eines sog. Mitnehmerringes 9 an der Halbachse 4 angeflanscht ist; Kraftschluß zwischen letzterer und dem Mitnehmerring 9 ist z. B. wiederum durch eine Preßpaß-Verbindung erreicht. Wegen dieser mittelbaren Verbindung ist das Außenteil 7.1 der Kupplung 7 zusätzlich an der dem Verbindungselement 8 abgewandten Seite auf dem hohlzylindrischen Halbachsenende 5.1 drehbeweglich abgestützt. Je nach Bauform und Gewicht des Außenteils 7.1 kann auf diese drehbewegliche Abstützung des Außenteils 7.1 der Kupplung 7 mittels eines Radiallagers 10 auch verzichtet werden oder kann, wie dargestellt, erforderlichenfalls durch ein solches Radiallager 10 das Außenteil 7.1 auch beidseitig gestützt werden.

Natürlich ist das Verbindungselement 8 torsionssteif ausgebildet. Um Spannungen desselben und der zugeordneten Verbindungsmittel sowie Lagerverspannungen weitestgehend auszuschließen, ist bei dem Verbindungselement 8 zugleich auf Biegesteifigkeit verzichtet. Dies ist ohne Beeinträchtigung der Torsionssteifigkeit beispielsweise durch einen Aufbau des Verbindungselementes 8 als ein Faserwickelkörper mit einem begrenzt gummielastischen Stoff (z. B. Polyurethan) als Bindungsmasse von zur Achsrichtung kreuzweise orientierten Fasern erreichbar. Natürlich kann zur Spannungsunterbindung auch auf übliche Mittel zur gelenkigen Verbindung des Verbindungselementes 8 mit dem Außenteil 7.1 und Mitnehmerring 9 zurückgegriffen werden.

Der vorbeschriebene Radsatz hat den offensichtlichen Vorteil, daß die Rollenlager 6 (wie die Radiallager 10) keine Hochleistungslager zu sein brauchen, weil sie nur mit der zwischen den beiden Rädern 2,3 bzw. deren Halbachsen 4, 5 durch die Magnetpulver-Kupplung 7 jeweils (aktiv) zugelassenen Differenzdrehzahl laufen.

## Patentansprüche

1. Radsatz für Schienenfahrzeuge, mit zwei auf einer Achswelle (1) sitzenden, profilierte Laufflächen aufweisenden Rädern (2, 3), welche zum Einstellen einer Differenzdrehzahl über eine Kupplung (7) kraftschlüssig verbunden sind, deren beide Kupplungsteile (7.1, 7.2) einen zur Achswelle konzentrischen Arbeitsspalt (7.4) für ein magnetisierbares Pulver begrenzen, dadurch gekennzeichnet, daß die Achswelle (1) in zwei Halbachsen (4, 5) geteilt ist, welche für sich drehbar sowie gegeneinander unverschiebbar sind durch Zwischenfügung einer Axialkräfte der beiden Räder (2, 3) aufnehmenden Radiallagerung in einem Achswellenbereich, in welchem die eine Halbachse (4) über einen Endschaft (4.1) in die zumindest zur Radsatzmitte hin hohlzylindrische andere Halbachse (5) eingesteckt ist, und daß das Außenteil (7.1) der Kupplung (7) in torsionssteifer Verbindung mit der einen Halbachse (4) auf dem hohlzylindrischen Ende (5.1) der anderen Halbachse (5) drehbeweglich und das Innenteil (7.2) der Kupplung (7) auf diesem Halbachsenende (5.1) fest angeordnet ist.

2. Radsatz nach Anspruch 1, gekennzeichnet durch eine Radiallagerung aus einem Paar gegeneinander angestellter Rollenlager (6), von welchen je eines einem Ende des Endschaftes (4.1) zugeordnet ist.

3. Radsatz nach Anspruch 1 oder 2, dadurch gekennzeichnet, daß das Außenteil (7.1) der Kupplung (7) an der zugeordneten Halbachse (4) über ein einerseits hieran angeflanschtes, andererseits das hohlzylindrische Halbachsenende (5.1) überkragendes, torsionssteifes Verbindungselement (8) angeschlossen ist.

4. Radsatz nach Anspruch 3, dadurch gekennzeichnet, daß das torsionssteife Verbindungselement (8) definiert biegeweich ist.

## Claims

1. A wheel set for rail vehicles, with two wheels (2, 3) which are seated on an axle-shaft (1) and which have profiled running surfaces and which, for the setting of a differential rotational speed, are connected in force-locking manner by way of a clutch (7), the two clutch parts (7.1, 7.2) of which define, concentric with the axle-shaft, a working gap (7.4) for a magnetizable powder, characterised in that the axle-shaft (1) is split into two half-axles (4, 5), which are independently rotatable as well as mutually non-displaceable through the interpolation of a radial absorbing axial forces of the two wheels (2, 3), in an axle-shaft region in which the one half-axle (4) is inserted by way of an end shaft (4.1) into the other half-axle (5) which is hollow-cylindrical at least towards the wheel set centre, and in that the outer part (7.1) of the clutch (7), in torsionally-stiff connection the one half-axle (4), is arranged so as to be rotatably-movable on the hollow-cylindrical end (5.1) of the other half-axle (5) and the inner part (7.2) of the clutch (7) is fixedly arranged on this half-axle end (5.1).

2. A wheel set according to claim 1, characterised by a radial bearing consisting of a pair of mutually pitched roller bearings (6), one of which is associated with each end of the end shaft (4.1).

3. A wheel set according to claim 1 or 2, characterised in that the outer part (7.1) of the clutch (7) is connected to the associated half-axle (4) by way of a torsionally-stiff connecting element (8) which is on the one hand flange-mounted thereon and which on the other hand overhangs the hollow-cylindrical half-axle end (5.1).

4. A wheel set according to claim 3, characterised in that the torsionally-stiff connecting element (8) is specifically flexurally pliant.

## Revendications

1. Essieu monté pour véhicules sur rails, comprenant deux roues (2, 3) qui sont fixées sur un corps d'essieu (1), présentent des surfaces de roulement profilées et sont, pour l'établissement d'une vitesse de rotation différentielle, reliées par frottement par l'intermédiaire d'un coupleur (7) dont les deux parties (7.1, 7.2) délimitent un entrefer (7.4) concentrique au corps d'essieu et destiné à contenir une poudre magnétisable, caractérisé en ce que le corps d'essieu (1) est divisé en deux demi-essieux (4, 5) qui sont mobiles en rotation séparément l'un de l'autre et immobilisés en translation l'un par rapport à l'autre par l'intermédiaire d'un système de roulement radial absorbant des forces axiales des deux roues (2, 3) et disposé dans une zone du corps d'essieu dans laquelle l'un des demi-essieux (4) est emboîté par l'intermédiaire d'un bout d'arbre terminal (4.1) dans l'autre demi-essieu (5) en forme de cylindre creux au moins en direction du milieu de l'essieu monté et en ce que la partie extérieure (7.1) du coupleur (7) reliée d'une manière rigide à la torsion à l'un des demi-essieux (4) est disposée mobile en rotation sur l'extrémité (5.1) en forme de cylindre creux de l'autre demi-essieu (5) tandis que la partie intérieure (7.2) du coupleur (7) est disposée de manière fixe sur cette extrémité de demi-essieu (5.1).

2. Essieu monté selon la revendication 1, caractérisé par un système de roulement radial composé d'une paire de roulements à rouleaux (6) montés en opposition dont chacun est associé à une extrémité du bout d'arbre terminal (4.1).

3. Essieu monté selon la revendication 1 ou 2, caractérisé en ce que la partie extérieure (7.1) du coupleur (7) est raccordée au demi-essieu correspondant (4) par un élément d'assemblage (8) rigide à la torsion qui est d'une part fixé par bride sur ledit demi-essieu (4) et fait d'autre part saillie par-dessus l'extrémité de demi-essieu en forme de cylindre creux (5.1).

4. Essieu monté selon la revendication 3, caractérisé en ce que l'élément d'assemblage (8) rigide à la torsion a une flexibilité définie.